# EUROPÄISCHE PATENTSCHRIFT

(11) **EP 2 803 649 B1**
(45) Veröffentlichungstag und Bekanntmachung des Hinweises auf die Patenterteilung: **13.04.2016**
(21) Anmeldenummer: 13003310.3
(22) Anmeldetag: 28.06.2013
(51) Int. Cl.: C04B 7/32, C04B 28/06, C04B 41/50, C04B 111/00, C04B 111/10

(54) **Weisser Tonerdezement**
White Alumina cement
Ciment alumineux blanc

(30) Priorität: 15.05.2013 US 201361823543 P
(43) Veröffentlichungstag der Anmeldung: 19.11.2014
(73) Patentinhaber: Calucem GmbH, 68219 Mannheim (DE)
(72) Erfinder: Schmid, Markus, 91207 Lauf a.d. Peg. (DE); Ostrander, Douglas, Allentown, PA 18104 (US)
(74) Vertreter: Patentanwälte Zellentin & Partner

(56) Entgegenhaltungen:
- EP-A2- 1 614 670
- DE-B1- 2 649 032
- DE-B3-102009 014 886
- DE-C- 437 186
- JP-A- H0 797 243
- JP-A- S62 167 241
- JP-A- 2005 162 566
- US-A- 2 407 135
- US-A- 3 150 992
- US-A- 3 963 508
- US-A- 4 217 144
- US-A1- 2010 175 588
- Hewlett, P.C.: "Lea's Chemistry of Cement and Concrete", 2004, Elsevier Butterworth-Heinemann, Oxford OX2 8DP, Burlington, MA 01803, XP002718083, ISBN: 0 7506 6256 5 Bd. 4, Seiten 771-775, * Seite 771 - Seite 775 *

## Beschreibung

Die vorliegende Erfindung betrifft einen Tonerdezement.

Der erste Tonerderzement, der im Schmelzverfahren hergestellte, eisenhaltige "Ciment Fondu Lafarge" wurde im Jahr 1918 in den Handel gebracht. Seit 2006 sind Tonerdezemente erstmals in der EN 14647 genormt. Auf Grund ihres im Vergleich zu Portlandzement erheblich höheren Aluminatgehaltes, wurden sie im englischen Sprachraum zunächst als High Alumina Cement bezeichnet. In Deutschland war und ist noch die Bezeichnung Tonerdezement üblich. In der Literatur hat sich der Name Calcium-Aluminate Cement durchgesetzt, in Analogie zu den Portlandzementen, bei denen es sich um Calcium-Silicate-Cements handelt.

Handelsübliche Tonerdezemente umfassen, bezogen auf ihren Aluminiumoxidgehalt, einen Bereich von 36 - 85 Gew.-% Aluminiumoxid. Sie können entweder nach dem Schmelz- oder nach dem Sinterverfahren hergestellt sein. Eine sinnvolle Einteilung der verschiedenen Tonerdezement - Typen kann in die Kategorien: eisenreich, eisenarm und eisenfrei erfolgen

Typische eisenreiche Tonerdezemente werden im Schmelzverfahren hergestellt, besitzen eine graue bis schwarzgraue Farbe und können in ihrer chemischen Zusammensetzung folgendermaßen charakterisiert werden: 36 - 42 % Al₂O₃, 2 - 6 % SiO₂, 14-19 % Fe₂O₃, 37 - 40 % CaO und weniger als 1,5 % MgO sowie weniger als 0,4 % SO₃.

Eisenarme Tonerdezemente sind beige bis grau gefärbt und enthalten typischerweise:
50 - 55 % Al₂O₃, 2 - 6 % SiO₂, 1 - 3 % Fe₂O₃, 37 - 40 % CaO sowie weniger als 1,5 % MgO und weniger als 0,4 % SO₃.

Eisenfreie Tonerdezemente werden von EN 14647 nicht erfasst, sind von weißer Farbe, unterschiedlichem Helligkeits- bzw. Weißheitsgrad, werden üblicher Weise im Sinterverfahren hergestellt, können zugesetztes Al₂O₃ enthalten und weisen deshalb die folgenden, typischen Zusammensetzungen auf:
68-85 % Al₂O₃, < 1 % SiO₂, < 0,5 % Fe₂O₃, 26 -31 % CaO.

Es wird deutlich, dass Tonerdezemente mit steigendem Eisengehalt zunehmend dunkler gefärbt sind.

Bei der Herstellung von Tonerdezementen bilden sich je nach dem gewählten Verhältnis von Aluminiumoxid zu Calciumoxid folgende mineralische Phasen:
- bei eisenreichem Tonerdezement: Monocalciumaluminat (CA), Brownmillerit (C₄AF), Belit (C₂S), Gehlenit (C₂AS), Mayenit (C₁₂A₇) und Perowskit (CT)
- bei eisenarmem Tonerdezement: CA, C₂AS, CT, C₁₂A₇ und
- bei eisenfreiem Tonerdezement: CA, CA₂, C₁₂A₇, A.
Dabei bedeuten, der zementchemischen Kurzschreibweise entsprechend:
C: CaO; A: Al₂O₃; F: Fe₂O₃; H: H₂O; AH₃: 2Al(OH)₃; S: SiO₂; und T: TiO₂.
Zur chemischen und mineralogischen Zusammensetzung von Tonerdezementen siehe z.B. Taylor, "Cement Chemistry", 2. Aufl., S. 296 und "Lea's Chemistry of Cement and Concrete", 4. Aufl., 2004, S. 716ff.

Für die besonderen hydraulischen Eigenschaften der Tonerdezemente, d.h. für ihre, im Vergleich zu hochwertigen Portlandzementen sehr hohe Frühfestigkeitsentwicklung bereits im Stundenbereich, ist vor allem die Phase Monocalciumaluminat CA verantwortlich. Die Reaktion des in höher Al₂O₃ - haltigen Tonerdezementen vorhandenen CA₂ mit Wasser, erfolgt sehr langsam. Die Phasen CA und, falls vorhanden C₁₂A₇, sind die einzigen, zu frühen Terminen mit Wasser reagierenden Phasen in Tonerdezementen, siehe z.B. Taylor, "Cement Chemistry", 2. Aufl., S. 298 und "Lea's Chemistry of Cement and Concrete", 4. Aufl., 2004, S. 727. Grundsätzlich lässt sich danach sagen, dass die Reaktionsfähigkeit von Calciumaluminaten gegenüber Wasser mit steigendem Mol-Verhältnis C/A zunimmt, wie es in der folgenden Tabelle 1 dargestellt ist.

**Tabelle 1 Relative hydraulische Reaktivität von Calciumaluminaten**

| Calciumaluminat | Mol-Verhältnis C/A | Relative Reaktivität |
|---|---|---|
| C₃A | 3,0 | Sehr hoch |
| C₁₂A₇ | 1,7 | Sehr hoch |
| CA | 1,0 | Hoch |
| CA₂ | 0,5 | Sehr gering |
| CA₆ | 0,17 | inert |

Ein zu hoher Gehalt an C₁₂A₇ kann auf Grund seiner sehr hohen hydraulischen Reaktivität zu einem frühen Ansteifen des Tonerdezementes führen.

Die festigkeitsbildende Hydratationsreaktion zwischen der Phase CA und Wasser verläuft prinzipiell in folgender Weise:

Reaktion 1 CA+10H -> CAH₁₀

Reaktion 1.1 2CA + 11 H -> C₂AH₈ + AH₃

Reaktion 1.2 3CA + 12H -> C₃AH₆ + 2AH₃

Reaktion 2 2CAH₁₀ -> C₂AH₈ + AH₃ + 9H

Reaktion 3 3C₂AH₈ -> 2C₃AH₆ + AH₃ + 9H

Reaktion 4 C₁₂A₇ + 51 H -> 6C₂AH₈ + AH₃

Die Material- und Umgebungstemperatur spielt bei der Hydratation von Tonerdezementen eine größere Rolle, als dies bei den Portlandzementen der Fall ist. Die Bildung von metastabilem CAH₁₀ nach Reaktion 1 läuft bei Temperaturen <10°C bevorzugt ab. Bei höheren Temperaturen zwischen 10°C und 27°C bildet sich nach Reaktion 1.1 metastabiles C₂AH₈ und AH₃ neben CAH₁₀. Bei höheren Temperaturen bildet sich zunehmend nach Reaktion 1.2 zusätzlich das stabile Hydrat C₃AH₆. C₁₂A₇ hydratisiert bevorzugt direkt nach Reaktion 4 zu C₂AH₈ und AH₃. Die Reaktionen 2 und 3 zeigen, dass auch primär gebildetes CAH₁₀ bei Temperaturen >10°C nach und nach in C₂AH₈ und C₃AH₆ übergeht, unter deutlicher Volumenverringerung und Freisetzung von Aluminiumhydroxid und Wasser.

Tonerdezemente sind Bestandteil vieler unterschiedlicher bauchemischer Produkte. Sie sind keine sogenannten Schnellzemente. Ihre herausragende Eigenschaft besteht darin, dass sie nach dem Anmachen mit Wasser, analog zu den Portlandzementen, zunächst eine Ruhephase von einer bis mehreren Stunden aufweisen. Entsprechend EN 14647 darf der nach EN 196-3 bestimmte Erstarrungsbeginn frühestens nach 90 Minuten eintreten. So lassen sich Tonerdezemente ausgezeichnet zu Mörtel und Beton verarbeiten und können auch transportiert werden. Nach dem Erstarren durchlaufen sie dann aber eine im Vergleich zu Portlandzementen ungleich schnellere Hydratation, mit der Folge einer außergewöhnlich hohen Druckfestigkeitsentwicklung bereits innerhalb weniger Stunden.

Die eisenreichen und eisenarmen Tonerdezemente, wie sie z.B. unter den Bezeichnungen Istra 40 (Calucem), Ciment Fondu (Kerneos), Electroland (Cementos Molins) sowie Gorkal 40 (Gorka), und Istra 50 (Calucem), SECAR 51 (Kerneos) sowie Gorkal 50 (Gorka) im Handel sind, können, geprüft an Normenmörtel nach EN 14647, nach 6 Stunden bereits Druckfestigkeiten aufweisen, die denjenigen von Portlandzementen der Güteklasse CEM I32.5 oder sogar der Güteklasse 42.5 nach 28 Tagen entsprechen. Da Tonerdezemente in Deutschland aber nicht im konstruktiven Bau verwendet werden dürfen, liegt ihre Hauptanwendung in Rezepturen der Bauchemie, feuerfesten Mörteln und Betonen der Feuerfestindustrie und weiteren speziellen Einsatzgebieten. Solche Gebiete sind z.B. Auskleidungen von Abwasserrohren bei Vorhandensein saurer oder aggressiver Wässer, denen Portlandzemente nicht ausreichenden Widerstand bieten, oder die Verfestigung problematischer Abfallstoffe und Demobilisierung von Schadstoffen, die die Erhärtung von Portlandzementen be- oder verhindern.
Aber auch in der Abwasseraufbereitung, z.B. zur Entsulfatisierung, durch Bildung von schwerlöslichen Calciumaluminatsulfathydraten, werden Tonderdezemente eingesetzt.

Die in EN 14647 festgelegten Anforderungen beruhen auf Ergebnissen von Zementprüfungen nach EN 196-1 (Bestimmung der Festigkeit), 196-2 (Chemische Analyse), 196-3 (Bestimmung der Erstarrungszeiten und der Raumbeständigkeit), 196-5 (Prüfung der Puzzolanität von Puzzolanzementen), 196-6 (Bestimmung der Mahlfeinheit) und 196-7 (Verfahren für die Probenahme und Probenauswahl). In diesem Patent werden einige Prüfergebnisse unter Bezug auf den jeweils relevanten Teil der EN 196 angegeben.

Auf Grund ihrer Eigenschaft, in Kombination mit Portlandzementen kurze Erstarrungs- bzw. Erhärtungszeiten herbeizuführen, ermöglichen Tonerdezemente als beschleunigender Bestandteil der unterschiedlichsten bauchemischen Rezepturen, nach deren Anmachen mit Wasser, ein im Zeitraum weniger Minuten bis Stunden genau einstellbares Erstarrungs- und Erhärtungsverhalten von Fließmassen, Pasten, Mörteln und Betonen.

Zum Erreichen und genauen Regeln zusätzlicher Eigenschaften enthalten derartige bauchemische Rezepturen oft eine Vielzahl von weiteren Zusätzen, wie z.B. Erstarrungsverzögerer und/oder-beschleuniger, Fließmittel, "Konsistenzgeber", Füllstoffe usw. mit deren Hilfe z.B. das Erstarrungsverhalten eingestellt, der Wasserbedarf zum Erreichen einer bestimmten Konsistenz verringert, das Wasserrückhaltevermögen erhöht und das Haftungsvermögen an bestimmten Materialien und Werkstoffen erhöht werden kann, wie das z.B. bei Putzen, Fliesenklebern, Bodenausgleichs- und Spachtelmassen erforderlich ist. Eine auch nur annähernd vollständige Aufzählung der handelsüblichen bauchemischen Produkte ist kaum möglich. Die Entwicklung und Optimierung der zugehörigen Rezepturen bis zur Marktreife ist meist sehr aufwändig und langwierig und die genauen Rezepturen stellen deshalb in der Regel Industriegeheimnisse dar.

Zur Herstellung von rein weißen bauchemischen Produkten und bestimmten gefärbten Rezepturen, wie z.B. Putzen, Spachtelmassen, Fugenmörteln usw., für die auf der Portlandzementseite die sogenannten "Weißzemente" zur Verfügung stehen, ist die Verwendung der oben beschriebenen Standardqualitäten der Tonerdezemente mit Al₂O₃-Gehalten um 40 oder 50 % nicht möglich, weil sie in der Regel eine graue bis grauschwarze oder schwarze (eisenhaltige Tonerdezemente) oder eine beige, gelbbraune bis hellgraue Farbe aufweisen (eisenarme Tonerdezemente), vgl. Taylor, "Cement Chemistry", 2. Aufl., S. 295 und Betoniek "High Alumina Cement", September 1998, S. 2. Für die Herstellung rein weißer Produkte muss die bauchemische Industrie deshalb auf die bisher im Markt vorhandenen, weißen Tonderdezemente zurückgreifen.

Unter dem Begriff "weiß" im Sinne der vorliegenden Erfindung werden folgende, nach dem L*a*b* System ermittelte Wertebereiche verstanden:
L*: ≥88
a*: -0,6 bis +0,7
b*: -0,6 bis +2,5
Der Farbmessung im Rahmen dieses Patentes liegt das als "CIELab" bekannte L*a*b* Farbsystem der internationalen Beleuchtungskommission CIE (Commission Internationale de l'Eclairage) von 1976 zugrunde. In diesem Farbsystem benennen die Messwerte Farborte auf 3 Raumkoordinaten. Der a* Wert definiert den Farbort auf der a - Achse mit den Gegenfarben Grün und Rot. Negative Werte stehen für Grün, positive Werte für Rot. Der b* Wert definiert einen Farbort auf der b - Achse zwischen den Gegenfarben Blau und Gelb. Negative Werte stehen für Blau, positive Werte für Gelb. Der Zahlenbereich für a* und b* liegt jeweils zwischen -100 und +100. Der L* Wert beschreibt die farbunabhängige Helligkeit (Luminanz) des Materials. Die L - Achse steht senkrecht zu den a- und b- Achsen und besitzt die "Gegengrautöne" Schwarz (L* = 0) und Weiß (L* = 100).

Die Messungen erfolgten mit einem Konica Minolta Chroma Meter CR-400, auf der Oberfläche von verdichteten, geglätteten und rissfreien Pulverpräparaten als Doppelbestimmung.

Der weiße Tonerdezement "Ternal White", Fa. Kerneos, und die weißen Porttandzemente "Dyckerhoff Weiss-Contact- und -Decor-", sind im Zementbereich als rein weiße Produkte anerkannt und können daher für das Kriterium "weiß" als Referenz dienen. Für "Ternal White" werden im Product Data Sheet (15.9.06) folgende L*a*b* Werte-Bereiche angegeben: L*: 93-96; a*: -0,5 < a* < 0; b*: 0,8 < b* < 1,5. Ähnliche Farbwerte weisen auch Produkte der Firmen Gorka (Gorkal 70), Kerneos (SECAR 71, SECAR 80) oder Almatis (CA-14, CA-270, CA-25) auf, die auch in bauchemischen Produkten Anwendung finden. Für "Dyckerhoff Weiss" werden in der "Broschüre: Dyckerhoff Weiss-Starke Typen" für den Typ "Contact" folgende Werte für a* und b* genannt: a*: ca. -0,6; b*: ca. 2,0 und für den Typ "Decor" findet sich auf der Firmen Web-Site: L* 93; a* -0,6; b* 2,5. Bei diesen Werten weist der Weißzement laut Firmenangaben keinerlei Gelb- oder Grünstichigkeit auf.

Die marktüblichen, weißen Tonerdezemente verfügen, soweit ihre Anwendung überwiegend im Feuerfestbereich liegt, auf Grund ihrer hohen Al₂O₃ Gehalte und der daraus resultierenden mineralogischen Zusammensetzung, über eine limitierte hydraulische Reaktivität, die sich aus ihren geringeren Gehalten an Monocalciumaluminat (CA) und ihren höheren Gehalten an hydraulisch wenig reaktivem Calciumdialuminat (CA₂) ergibt.

In reiner Form enthält Monocalciumaluminat (CA) 64,5 % Al₂O₃. Ein ohne Zusatz von Al₂O₃ hergestellter Tonerdezement mit einem höheren Al₂O₃ Gehalt enthält deshalb weniger Monocalciumaluminat (CA), und zusätzlich höher Al₂O₃- haltiges Calciumdialuminat (CA₂), Grossit, das hydraulisch erheblich weniger reaktiv ist, vgl. Taylor, "Cement Chemistry", 2. Aufl., S. 298 und "Lea's Chemistry of Cement and Concrete", 4. Aufl., 2004, S. 727, und nur einen geringen bis keinen Frühfestigkeitsbeitrag liefern kann. Der Gehalt an Monocalciumaluminat (CA) wird noch weiter verringert in Tonerdezementen, denen zur Verbesserung ihrer Feuerfesteigenschaften feines, hydraulisch unreaktives Al₂O₃ zugesetzt wird, wodurch sich zusätzlich der "Weißgehalt" dieser Zemente erhöht.

In der Feuerfest-Industrie werden Tonerdezemente als Bindemittel für Feuerbetone eingesetzt. Dabei bewirken sie eine Erhärtung nach der Verarbeitung, wie auch bei den üblichen Betonen in der Bauindustrie. Feuerbetone sind definiert als ein Gemenge aus hydraulischen Bindemitteln, Feinanteil und gekörnten feuerfesten Zuschlagstoffen. Diese Werkstoffe setzen sich aus einem hydraulischen Bindemittel, meist Tonerdezement, sowie fein- und grobkörnigen Zuschlagstoffen wie Schamotten und Bauxit bis hin zu hochfeuerfesten Rohstoffen wie Korund, Sintertonerden oder Siliciumcarbid zusammen.

Die Verarbeitung der Feuerbetone erfolgt durch Vibration, Gießen, Stochern oder Spritzen. Nach dem Anmachen mit Wasser erhärten sie und werden dann in einem Trocknungs- und Aufheizprozess für den Einsatz vorbereitet. Menge und Typ der Bindemittel bestimmen neben den sonstigen Bestandteilen wichtige Eigenschaften der Feuerbetone, wie z.B. Festigkeit, Schwindung, Abrasionsbeständigkeit und vor allem ihre Feuerfestigkeit.

Die Feuerfestigkeit eines Feuerbetons hängt entscheidend von seinem Gehalt an chemischen Hauptkomponenten wie z.B. Al₂O₃ und/oder MgO ab. Je höher der Anteil dieser Hauptkomponenten und je geringer der Gehalt an Begleitkomponenten wie CaO und Verunreinigungen wie z.B. Alkalien oder Fe₂O₃ ist, umso höher ist die Feuerfestigkeit. Aus diesem Grund wird bei der Herstellung von Hochleistungsfeuerbetonen angestrebt, nur sehr reine Tonerdezemente zu verwenden und gleichzeitig deren Gehalt auf ein Minimum zu begrenzen.

Dieser Anforderung wurde in den letzten Jahrzehnten durch die Entwicklung sogenannter deflokkulierter Feuerbetone Rechnung getragen, deren Zementgehalt auf Werte bis hin zu < 5 Masse-% reduziert wurde. Durch die Verwendung geeigneter Feinstrohstoffe wie reaktiver und/oder kalzinierter Tonerde, Mikrosilika, sowie geeigneter organischer und/oder anorganischer Additive, können trotz des reduzierten Zementgehaltes sehr gute Verarbeitungseigenschaften erzielt werden, bei gleicher oder besserer Festigkeitsentwicklung. Die Feuerfestigkeit dieser Hochleistungsfeuerbetone wird dadurch erhöht, dass sie durch ihren geringeren Zementanteil einen niedrigeren CaO-Gehalt aufweisen.

Die folgende Tabelle 2 gibt die Einteilung der Feuerbetone nach DIN EN ISO 1927-1 wieder. Während in den Regular Cement Castables (RCC) alle Tonerdezementtypen zur Anwendung kommen, werden in den Varianten < 2,5 Gew.-% CaO die Tonerdezemente mit Al₂O₃ Gehalten ≥ 70 Gew.-% eingesetzt. Auch in Deutschland ist der Begriff "Castables" für feuerfeste Gießmassen üblich geworden.

**Tabelle 2 Klassifizierung der Feuerbetone nach DIN EN ISO 1927-1**

| Klassifizierung | CaO Gehalt | Zusätzl. Anforderung |
|---|---|---|
| Regular Cement Castables (RCC) | > 2,5 % | mind. 2 % Feinstoffe <1µm; kein Deflokkulant |
| Medium Cement Castables (MCC) | > 2,5 % | - |
| Low Cement Castables (LCC) | 1,0 bis 2,5 % | - |
| Ultra Low Cement Castables (ULLC) | 0,2 bis 1,0 % | - |
| No cement Castables | < 0,2 % | - |

Die Aufgabe der Tonerdezemente in den Feuerbetonen besteht, nach dem Anmachen mit Wasser, zunächst im Erreichen der Grünstandsfestigkeit und danach in der Erhärtung unter Ausbildung einer hydraulischen Bindung. Mit zunehmender Temperatur durchlaufen die Festigkeitswerte im Allgemeinen ein Minimum, das bei Tonderdezementen erheblich geringer ist als bei Portlandzementen und bei weißen, eisenfreien Tonerdezementen mit hohen Al₂O₃ Gehalten ≥ 70 Gew.-% geringer ist als bei eisenreichen und eisenarmen Tonerdezementen. Der Beginn des Übergangs der ursprünglichen hydraulischen Bindung in eine keramische Bindung wird durch einen deutlichen Wiederanstieg der Druckfestigkeit angezeigt und liegt bei einer Temperatur von ca. 1.000 °C, vgl. Tabelle 103, Salmang, Scholze: Keramik, 7. Auflage, 2007, Springer Verlag, S.762.

Tonerdezemente, die hohen Anforderungen an ihre Feuerfesteigenschaften genügen müssen, dürfen insbesondere keine Inhaltsstoffe aufweisen, durch die ihr Schmelzpunkt herabgesetzt wird. Solche Inhaltsstoffe sind z.B. die bereits erwähnten Alkalioxide Na₂O und K₂O, aber auch Eisenoxid als Fe₂O₃ oder FeO, das bei den eisenhaltigen und eisenarmen Standardqualitäten der Tonerdezemente mit 40 und 50 % Al₂O₃ überwiegend für deren hell- bis dunkelgraue Färbung verantwortlich ist. Besonders negativ auf die Beständigkeit der Feuerbetone gegenüber Kohlenmonoxid CO wirken sich bereits geringste Gehalte an metallischem Eisen aus.

Die Feuerfestigkeit der Tonerdezemente selbst ist umso höher, je mehr Gew.-% Al₂O₃ (A) sie im Verhältnis zu CaO (C) enthalten, d.h. je höher ihr A/C Wert, berechnet aus den Gew.-% Werten Al₂O₃/CaO der chemischen Analyse, ist. Deshalb werden für hohe Anforderungen in diesem Bereich weiße Tonerdezemente mit erhöhtem Al₂O₃ Gehalt verwendet.

Die folgende Übersicht nach "Lea's Chemistry of Cement and Concrete", 4. Aufl. Edition 2004, S. 772 verdeutlicht diesen Zusammenhang:
Eisenreich, grau: A/C=1,15 PCE: 1270 - 1290 °C
Eisenarm, braun: A/C = 1,40 PCE: 1430 - 1450 °C
Eisenfrei, weiß: A/C = 2,50 PCE: 1590 - 1620 °C
Eisenfrei, weiß: A/C = 4,70 PCE: 1770 - 1810 °C
Man erkennt, dass der Kegelfallpunkt (PCE), der ein Maß für die Feuerfestigkeit eines Materials darstellt, mit steigendem A/C Wert der Tonerdezemente zu höheren Temperaturen hin verschoben wird. "PCE" steht für "Pyrometric Cone Equivalent", dem Kegelfallpunkt.

Der CaO Gehalt in Feuerbetonen stammt hauptsächlich aus den Calciumaluminaten des Tonerdezements (CA, CA₂, C₁₂A₇). Dabei weisen hydraulisch reaktive, frühfestigkeitsbildende Calciumaluminate wie z.B. Monocalciumaluminat (CA) höhere CaO Gehalte auf, als hydraulisch unreaktives Calciumdialuminat (CA₂). Aus diesem Grund werden im Hinblick auf die Feuerfesteigenschaften des Bindemittels in Feuerbetonen bevorzugt Tonerdezemente mit niedrigem CaO und hohem Al₂O₃ Gehalt eingesetzt.

Weiße Tonerdezemente für die Feuerfestindustrie enthalten deshalb weniger Monocalciumaluminat (CA), dessen A/C Wert 1,82 beträgt und dafür Anteile der Phase Calciumdialuminat (CA₂) mit einem A/C Wert von 3,64. Erforderlichenfalls wird noch reines Al₂O₃ zugesetzt, mit dem der A/C Wert und somit die Feuerfestigkeit des Tonerdezementes noch weiter erhöht werden kann.

Ausschlaggebend für die frühe hydraulische Festigkeitsentwicklung der Tonerdezemente sind aber die höher CaO haltigen Calciumaluminate wie Monocalciumaluminat (CA)- der Hauptbestandteil von Tonerdezementen, der auch für das rheologische- und das Erstarrungsverhalten der Tonerdezemente von Bedeutung ist.

Der Anspruch an den CaO Gehalt des Bindemittels Tonerdezement und der Anspruch an den CaO Gehalt des Feuerbetons sind also konträr.

Ein Tonerdezement, der sowohl eisenfrei, also weiß und für die Herstellung von Feuerbetonen geeignet ist, bei gleichzeitiger größtmöglicher hydraulischer, festigkeitsbildender Reaktivität, steht der Bauchemie und der Feuerfestindustrie bisher nicht zur Verfügung. Aufgabe der vorliegenden Erfindung war es somit, einen solchen Tonerdezement bereitzustellen.

Überraschend wurde nun gefunden, dass ein weißer Tonerdezement, der wenigstens 90 Gew.-% Monocalciumaluminat enthält, einen A/C-Wert im Bereich von 1,75 bis 2,0 aufweist, auf eine Mahlfeinheit im Bereich von 3500 bis 6000 cm²/g aufgemahlen ist und eine Korngrößenverteilung mit einem Steigungsmaß n im Bereich von 1,1 bis 1,5 bei einem Lageparameter x' von 8 - 20 µm in einem RRSB Körnungsnetz aufweist, die obigen Anforderungen erfüllt.

Die vorliegende Erfindung betrifft daher einen weißen Tonerdezement, der mindestens 90 Gew.-% Monocalciumaluminat (CA) enthält, einen A/C-Wert im Bereich von 1,75 bis 2,0, eine Mahlfeinheit im Bereich von 3500 bis 6000 cm²/g, ein Steigungsmaß n im Bereich von 1,1 bis 1,5 und einen Lageparameter x' von 8 - 20 µm in einem RRSB Körnungsnetz nach DIN 66145 aufweist. Die Erfindung betrifft auch seine Verwendung als Bindemittelkomponente in Rezepturen der Feuerfestindustrie, der bauchemischen Industrie und allen Einsatzgebieten für Tonerdezemente, bei denen die erfindungsgemäßen Eigenschaften von Vorteil sind.

Vorzugsweise enthält der Tonerdezement weniger als 3 Gew.-% C₁₂A₇ und/oder weniger als 7 Gew.-% CA₂. Er entspricht in seiner hydraulischen Reaktivität bei vergleichbarer Mörtelkonsistenz mindestens den handelsüblichen Tonerdezementen mit Al₂O₃ Gehalten um 40 Gew.-% und 50 Gew.-%, d.h. er zeigt bzw. übertrifft deren bekannte, sehr hohe Druckfestigkeitsentwicklung, insbesondere im Zeitraum bis 24 Stunden.

Seine Farbe liegt im L*a*b* Farbsystem innerhalb der folgenden Wertebereiche:
L*: 92 ± 4, vorzugsweise 93 ± 2
a*: -0,6 bis +0,7
b*: -0,6 bis +2,5

Es hat sich gezeigt, dass der erfindungsgemäße Tonerdezement als Bindemittel in an sich bekannten Feuerfestrezepturen und bauchemischen Zusammensetzungen überraschenderweise eine Reihe von Vorteilen hat.

Diese Vorteile ergeben sich zum einen daraus, dass durch den Einsatz des erfindungsgemäßen, hydraulisch hoch aktiven Tonerdezementes in Feuerbetonen der Bindemittelgehalt im Vergleich zu bisher üblichen Rezepturen unter Verwendung eisenfreier Tonerdezemente mit 70 und 80 % Al₂O₃ deutlich verringert werden kann, ohne dass sich dadurch Nachteile für die Verarbeitungseigenschaften, die Druckfestigkeit und die Feuerfesteigenschaften ergeben. Aus den bekannten Feuerfest-Eigenschaften der verschiedenen Calciumaluminate waren beim Einsatz des erfindungsgemäßen Tonerdezements an sich Nachteile zu erwarten.

Durch die überraschenden Eigenschaften des erfindungsgemäßen Tonerdezements kann sein Anteil in feuerfesten Werkstoffen und Feuerbetonen so weit gesenkt werden, dass der Gehalt an Monocalciumaluminat (CA) in diesen Mörteln und Betonen demjenigen vergleichbar ist, der von den üblichen, hoch Al₂O₃-haltigen, weißen Tonerdezementen in diese Feuerfestmörtel eingebracht wird, unter Vermeidung eines CaO Eintrags durch hydraulisch unreaktive Calciumaluminatphasen wie Calciumdialuminat (CA₂). Dadurch werden vergleichbare oder bessere Feuerfesteigenschaften der Feuerfestmörtel und Feuerbetone erreicht.

Es hat sich auch gezeigt, dass sich die Fließfähigkeit der bekannten Feuerfestrezepturen bei Verwendung des erfindungsgemäßen Tonerdezementes anstelle der üblichen Tonerdezemente mit 70 und 80 Gew.-% Al₂O₃ nach dem Stand der Technik deutlich verbessert. Dies ist überraschend, da der erfindungsgemäße Tonerdezement im Bereich des Steigungmaßes n im RRSB Körnungsnetz nach DIN 66145 relativ hohe Werte von 1,1-1,5 aufweist. Der erfindungsgemäße Tonerdezement, dessen Herstellung in den Beispielen 1 und 2 veranschaulicht wird und der in den Beispielen 3 bis 6 geprüft wurde, wies bei einer Mahlfeinheit von 4323 cm²/g einen Lageparameter x' von 13,60 und ein Steigungsmaß von n = 1,29 auf. Sein Wasseranspruch, gemessen am Leim nach EN 196-3, betrug 39,0%.

Der prinzipielle Zusammenhang zwischen dem Wasseranspruch eines Zementes nach EN 196-3 und der spezifischen Oberfläche nach Blaine, sowie dem Lageparameter x' und dem Steigungsmaß n im RRSB Netz nach DIN 66145 ist ausführlich untersucht und bekannt, siehe z.B. S.Sprung, K. Kuhlmann, H.-G. Ellerbrock, "Korngrößenverteilung und Eigenschaften von Zement", Teil II, ZKG Nr. 9/1985, S. 530 und VDZ Zementtaschenbuch 2002, Pkt. 5, S. 139ff.

Der Lageparameter x' bezeichnet im RRSB Körnungsnetz nach DIN 66145 diejenige Korngröße, bei der der Anteil derjenigen Partikel 36,8 % beträgt, die größer sind als x' (in µ) und der Anteil derjenigen Partikel 63,2 % beträgt, die kleiner sind als x'. Die Steigung n der RRSB Geraden ist ein Maß für die Breite der Verteilung. Je größer der Wert von n ist, desto enger ist die Korngrößenverteilung.

Auf Grund des gesicherten Wissens, dass der Wasseranspruch eines Zementes mit zunehmendem Blainewert und kleiner werdendem Lageparameter x' der Korngrößenverteilung ansteigt und sich auch bei gleichem Lageparameter x' mit enger werdender Korngrößenverteilung erhöht, ist die Verbesserung des Fließverhaltens in Rezepturen sowohl der Feuerfestindustrie als auch der Bauchemie bei Einsatz des erfindungsgemäßen Tonerdezementes unerwartet.

Durch den erfindungsgemäßen Tonerdezement wird es möglich, rein weiße und bestimmte gefärbte, bauchemische Rezepturen mit größtmöglicher hydraulischer Reaktivität, auch über das bisher mögliche Maß hinaus, herzustellen. Zugleich zeigt sich in diesen und anderen, d.h. nicht weißen Rezepturen der Bauchemie, die überraschende Eigenschaft des erfindungsgemäßen Tonerdezementes, auf Grund bzw. trotz seiner steilen Kornverteilungskurve, bei deutlich geringerer Dosierung zu einem verbesserten Fließverhalten zu führen.

Ein erfindungsgemäßer Tonerdezement enthält zumindest 90 Gew.-% CA, vorzugsweise 92 Gew.-% oder mehr und besonders bevorzugt 95 Gew.-% oder mehr. Der Gehalt an C₁₂A₇ liegt vorzugsweise bei 3 Gew.-% oder darunter, insbesondere bei 2 Gew.-% oder darunter und ganz besonders bevorzugt bei 1 Gew.-% oder darunter. Der Gehalt an CA₂ liegt vorzugsweise bei 7 Gew.-% oder darunter, insbesondere bei 6 Gew.-% oder darunter und ganz besonders bevorzugt bei 4 Gew.-% oder darunter.

Das Steigungsmaß n in einem RRSB-Körnungsnetz beträgt für erfindungsgemäße Tonerdezemente 1,1 bis 1,5, vorzugsweise 1,15 bis 1,4 und insbesondere 1,2 bis 1,3. Der Lageparameter x' liegt im Bereich von 8 bis 20 µm, bevorzugt im Bereich von 10 bis 18 µm und besonders bevorzugt im Bereich von 11 bis 17 µm. Die Feinheit nach Blaine liegt im Bereich von 3500 bis 6000 cm²/g, vorzugsweise im Bereich von 4000 bis 5000 cm²/g und insbesondere im Bereich von 4200 bis 4800 cm²/g.

Der erfindungsgemäße Tonerdezement kann in an sich bekannter Weise aus einer genau entsprechenden Mischung aluminium- und kalkhaltiger Einsatzstoffe geschmolzen oder gesintert werden. Besonders geeignet ist eine Herstellung in der Schmelze mittels Plasmaverfahren im Lichtbogenofen.

Der Klinker wird nach dem Abkühlen in an sich bekannter Weise vermahlen. Mahlsystem, -dauer und Energieeintrag werden so gewählt, dass sich die gewünschte Korngrößenverteilung und Mahlfeinheit ergibt. Nötigenfalls kann auch ein Sichten erfolgen. Der abgekühlte, kleinstückig vorliegende Tonerdezementklinker wird gemäß EN 14647, Pkt. 5, in der Regel ohne weitere Zusätze, in geeigneten Mahlanlagen fein gemahlen. Geeignet sind grundsätzlich Kugelmühlen, in denen Mahlkugeln unterschiedlicher Größe in einem rotierenden, zylindrischen Mühlenkörper durch Roll- und Fallbewegungen das Mahlgut zerkleinern. Üblicherweise sind Kugelmühlensysteme mit Massenstromregelungen und sogenannten Windsichtern ausgestattet, die den Anteil des Zementes aus dem Mahlkreislauf abführen, der die Zielfeinheit und die erwünschten Körnungsparameter erreicht hat. Geeignet sind aber auch energieeffizientere, nach dem Druckzerkleinerungsverfahren arbeitende Gutbett-Walzenmühlen, alleine oder in Kombination mit Kugelmühlensystemen und Vertikal Wälzmühlen. Zemente, die in Gutbett-Walzenmühlen und Vertikal Wälzmühlen ermahlen werden, weisen im Vergleich zu Zementen aus Kugelmühlen eine engere Korngrößenverteilung auf. Es ist auch möglich, die erfindungsgemäßen Körnungsparameter durch Mischen verschiedener Zementchargen gleicher oder verschiedener Mühlensysteme einzustellen.

Da der erfindungsgemäße Tonerdezement neben seiner hohen hydraulischen Reaktivität auch eine besonders hohe Eignung für den Einsatz in Feuerbetonen aufweist, ist die Vermahlung des erfindungsgemäßen Klinkers in Systemen bevorzugt, bei denen die Kugelmühle anstelle von Stahlkugeln mit Aluminiumoxid-Mahlkörpern ausgestattet ist und über eine Aluminiumoxid-Auskleidung verfügt. Ebenfalls geeignet ist beispielsweise eine Fließbettgegenstrahlmühle. Auf diese Weise wird der Eintrag von metallischem Eisen minimiert und sehr geringe Gehalte an metallischem Eisen unterhalb 100 ppm erreicht, was zu einer besonders hohen CO-Beständigkeit der damit hergestellten Castables beiträgt.

Aufgrund der vorteilhaften Eigenschaften eignet sich der erfindungsgemäße Tonerdezement sehr gut zur Herstellung bauchemischer Produkte, wie z.B. Spachtelmassen, Putze, Fliesenkleber, Reparaturmörtel, Fließmassen, Bodenausgleichsmassen, Spritzmörtel und -betone, Betone für Rohrauskleidungen, aber auch zum Verfestigen problematischer Abfallstoffe und der Demobilisierung von Schadstoffen, sowie zum Einsatz in Entsulfatisierungsverfahren im Rahmen der Abwasseraufbereitung. Die bisherigen Rezepturen können dafür in wesentlichen Teilen beibehalten werden. Auf Grund des sich bei Verwendung des erfindungsgemäßen Tonerdezementes in Rezepturen ergebenden, guten Fließmaßes, können die Anteile an Verflüssigern und Fließmitteln in vorhandenen Rezepturen in der Regel beibehalten werden, während der Dosierungsanspruch für Verzögerer entweder unverändert bleibt oder aufgrund der hohen hydraulischen Reaktivität des Tonerdezementes etwas erhöht wird.

Der erfindungsgemäße Tonerdezement ist darüberhinaus bestens zur Herstellung von Castables und anderen Produkten für die Feuerfestindustrie geeignet. Auch hier ist eine Anpassung der Rezepturen ggf. in der Art und Weise erforderlich und sinnvoll, wie sie sich für den Fachmann aus der Senkung des Bindemittelanteils einerseits und der positiven Änderung des Fließverhaltens andererseits ergibt. Bei Einsatz des erfindungsgemäßen Tonerdezementes ist es nun grundsätzlich möglich, bestehende Castables durch Einsatz des erfindungsgemäßen Tonerdezementes in CaO-ärmere Feuerbetonkategorien entsprechend DIN EN ISO 1927-1 zu überführen. Hier ist von Vorteil, dass der Gehalt an Eisen, berechnet als Fe₂O₃, bevorzugt 0,3 Gew.-% oder weniger, besonders bevorzugt 0,2 Gew.-% oder weniger und insbesondere 0,1 Gew.-% oder weniger beträgt.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Zur Herstellung von erfindungsgemäßem Tonerdezement wurde auf einer dreiphasigen 300 KVA Lichtbogenanlage mit wassergekühltem Ofenmantel und drei senkrecht angeordneten Graphit Elektroden von 60 mm Durchmesser Klinker hergestellt. Als Ausgangsstoffe wurden feinkörnige Tonerde, Al₂O₃ (SO 143, Fa. DADCO) und Branntkalk, CaO (Precal 30s, Fa. SchäferKalk) mit der chemischen Zusammensetzung nach Tabelle 3 eingesetzt.

**Tabelle 3: Chemische Zusammensetzung der Ausgangsstoffe**

| Ausgangsstoffe | Tonerde | CaO |
|---|---|---|
| Glühverlust 1000°C | 3,00 % | 2,40 % |
| SiO₂ | 0,00 % | 0,13 % |
| Al₂O₃ | 96,67 % | 0,10 % |
| TiO₂ | 0,00 % | 0,00 % |
| Fe₂O₃ | 0,01 % | 0,03 % |
| CaO | 0,00 % | 96,59 % |
| MgO | 0,00 % | 0,75 % |
| Na₂O | 0,32 % | 0,00 % |
| SO₃ | 0,00 % | 0,00 % |

Aus den Ausgangsstoffen wurde eine homogene Mischung hergestellt, bestehend aus 65 Gew.-% Tonerde und 35 Gew.-% CaO. Der Ofen wurde überwiegend im Lichtbogenbetrieb gefahren und die Schmelze in 7,5 Liter Graugussbehältern der Maße 250 x 125 x 250 mm³ abgegossen. Nach dem äußeren Verfestigen der Schmelze wurde die Form entfernt und die Formkörper kühlten bei Umgebungstemperatur ohne weitere Maßnahmen ab. Die Temperatur der Schmelze beim Verlassen des Ofens lag bei 25 gemessenen Gussbehältern zwischen 1640 °C und 1690 °C. Das abgekühlte Material wurde in einer Kugelmühle unter Verwendung von Al₂O₃-Mahlkörpern und Al₂O₃-Panzerung auf verschiedene Mahlfeinheiten nach Blaine vermahlen und dabei verschiedene Feinheitsparameter eingestellt.

Es werden auch weiße Tonerdezemente als Produkte für die Bauchemie angeboten und damit beworben, dass sie in allen Qualitätsparametern den traditionellen Tonerdezementen entsprächen. Nach Untersuchungen der Erfinder entsprechen diese Tonerdezemente in ihrer chemisch-mineralogischen Zusammensetzung aber überwiegend den für die Anwendung im Feuerfestbereich optimierten Qualitäten mit Al₂O₃ Gehalten um 70 %. Die Ergebnisse der mineralogischen Untersuchungen an einigen dieser weißen Tonerdezemente sind gemeinsam mit dem erfindungsgemäßen Tonerdezementklinker (ETZ/K1 und ETZ/K2) in der Tabelle 4 dargestellt.

**Tabelle 4: Mineralogische Analysen weißer Tonerdezemente**

| Tonerdezement | Phasenanalyse [%] | | | |
|---|---|---|---|---|
| | CA | C₁₂A₇ | CA₂ | A |
| CA-25R (Fa. Almatis) | 40,7 | 4,9 | 10,2 | 44,2 |
| CA-270 (Fa. Almatis) | 57,9 | 0,0 | 17,8 | 24,3 |
| SECAR 71 (Fa. Kerneos) | 58,2 | 0,3 | 40,6 | 0,9 |
| TERNAL WHITE (Fa. Kerneos) | 60,5 | 0.5 | 37,5 | 1,5 |
| SECAR 80 (Fa. Kerneos) | 34,8 | 0,9 | 25,7 | 38,6 |
| GORKAL 70 (Fa. Gorka) | 76,3 | 0,3 | 22,8 | 0,6 |
| ETZ/K1 | 95,4 | 0,4 | 3,7 | 0,5 |
| ETZ/K2 | 94,6 | 0,7 | 4,1 | 0,6 |

Aus den Daten der Tabelle 4 wird deutlich, dass die Gehalte an Monocalciumaluminat (CA) bei den handelsüblichen Tonerdezementen mit 70 und 80 Gew.-% Al₂O₃ oder höher, signifikant geringer sind, als beim erfindungsgemäßen Tonerdezement. Im SECAR 71 wurde ein CA - Gehalt von ca. 58 Gew.-% gefunden. Im SECAR 80 wurde ca. 40 Gew.-% Tonerde und dementsprechend ein CA Gehalt von 34,8 Gew.-% gefunden. Den mit 76 Gew.-% relativ höchsten Gehalt an Monocalciumaluminat wies die Probe des GORKAL 70 auf, die damit aber immer noch 19 % unter dem erfindungsgemäßen Tonerdezement liegt.

Die Tabelle 5 enthält die chemischen Analysen der aus den Tonerdezementklinkern ETZ/K1 und ETZ/K2 ermahlenen Tonerdezemente (ETZ 1 bzw. ETZ 2) und der handelsüblichen Tonerdezemente der Tabelle 4. Die K₂O Gehalte aller Proben der Tabelle 5 lagen bei 0.00 % und sind deshalb dort nicht mehr aufgeführt.

**Tabelle 5: Chemische Analyse weißer Tonerdezemente**

| Tonerdezement | Chemische Analyse [%] | | | | | | A/C | GV bei 1000 °C |
|---|---|---|---|---|---|---|---|---|
| | SiO₂ | Al₂O₃ | Fe₂O₃ | CaO | MgO | Na₂O | | |
| CA-25R (Fa. Almatis) | 0,04 | 80,51 | 0,07 | 18,44 | 0,05 | 0,15 | 4,37 | 0,72 |
| CA-270 (Fa. Almatis) | 0,08 | 74,28 | 0,09 | 25,65 | 0,14 | 0,00 | 2,90 | 0,18 |
| SECAR 71 (Fa. Kerneos) | 0,26 | 70,22 | 0,11 | 29,48 | 0,12 | 0,00 | 2,38 | 0,25 |
| TERNAL WHITE (Fa. Kerneos) | 0,15 | 70,67 | 0,04 | 28,76 | 0,13 | 0,00 | 2,45 | 0,19 |
| SECAR 80 (Fa. Kerneos) | 0,12 | 80,82 | 0,06 | 16,53 | 0,03 | 0,40 | 4,89 | 2,43 |
| GORKAL 70 (Fa. Gorka) | 0,15 | 70,15 | 0,07 | 28,86 | 0,06 | 0,00 | 2,43 | 0,71 |
| ETZ 1 | 0,43 | 64,43 | 0,03 | 34,70 | 0,18 | 0,00 | 1,86 | 0,24 |
| ETZ 2 | 0,40 | 64,24 | 0,02 | 34,83 | 0,17 | 0,00 | 1,84 | 0,30 |

### Beispiel 2

Aus den Tonerdezementklinkern von Beispiel 1 wurden ein erfindungsgemäßer Tonerdezement (ETZ 1) und ein nicht erfindungsgemäßer Tonerdezement (ETZ 2) ermahlen. Beide Zemente wurden auf einer Kugelmühle mit Al₂O₃-Mahlkugeln und Al₂O₃-Panzerung ermahlen. Der erfindungsgemäße Tonerdezement wurde auf einem Mahlsystem mit Sichter vermahlen, wohingegen der nicht erfindungsgemäße Tonerdezement im Durchlaufbetrieb ohne Sichtung hergestellt wurde. Als primäres Unterscheidungsmerkmal zum erfindungsgemäßen Tonerdezement wurde beim nicht erfindungsgemäßen Tonerdezement ein Steigungsmaß n im RRSB Körnungsnetz nach DIN 66145 <1,1 angestrebt, bei vergleichbarer spezifischer Mahlfeinheit nach Blaine.

An beiden Zementen wurden gemäß der Norm EN 14647 der Wasseranspruch zum Erreichen der Normsteife, die Erstarrungszeiten an Leim und Mörtel, sowie die Druckfestigkeit am Normmörtel nach 24 Stunden bestimmt. Entsprechend den Vorschriften der EN 14647 wird zur Bestimmung der Normsteife und des dafür erforderlichen Wasseranspruchs das Prüfverfahren der EN 196-3 angewandt. Die Bestimmung der Druckfestigkeit nach EN 14647 erfolgt an einem Normmörtel, der in seiner Zusammensetzung von den Vorschriften der EN 196-1 etwas abweicht. Bei gleichem Normensandgehalt von 1350 g, enthält der Mörtel 500 g Tonerdezement und 250 g Wasser. Die Bestimmung der Erstarrungszeiten am Mörtel wurde analog zum Verfahren nach EN 196-3 an diesem Normmörtel durchgeführt. Die Ergebnisse der Prüfungen sind in Tabelle 6 dargestellt. Außerdem zeigt Tabelle 6 die Werte für die auf gleiche Weise untersuchten, weißen handelsüblichen Tonerdezemente.

**Tabelle 6: Technisch-/Physikalische Daten**

| Tonerdezement | Wasser [%] | Erstarren Leim [h:min] | | Erstarren Mörtel [h:min] | | Druckfestigkeit 24 h [MPa] |
|---|---|---|---|---|---|---|
| | | Beginn | Ende | Beginn | Ende | |
| CA-25R | 24,8 | 0:45 | 0:55 | 0:30 | 0:40 | 40,6 |
| CA-270 | 22,0 | 12:00 | 14:40 | 4:10 | 4:15 | 78,7 |
| SECAR 71 | 26,0 | 5:45 | 6:40 | 2:50 | 2:55 | 76,0 |
| TERNAL WHITE | 28,6 | 3:55 | 8:30 | 00:40 | 1:25 | 69,6 |
| SECAR 80 | - | - | - | 1:30 | 2:20 | 20,3 |
| ETZ 1 | 39,0 | 08:00 | 11:00 | 03:50 | 04:15 | 76,1 |
| ETZ 2 | 28,0 | 1:30 | 2:05 | 00:15 | 00:35 | 62,9 |

In der Tabelle 7 sind für die gleichen Tonerdezemente die Ergebnisse der Bestimmungen der Mahlfeinheit nach Blaine und der Körnungsparameter x' und n im RRSB Körnungsnetz nach DIN 66145, sowie der Farbparameter nach dem L*a*b* System zusammengestellt. Die Bestimmung der Körnungsparameter x' und n erfolgten mit dem Lasergranulometer HELOS mit RODOS T4.1 der Fa. Sympatec GmbH.

**Tabelle 7: Körnungs- und Farbparameter**

| Tonerdezement | Blaine [cm²/g] | x' [µm] | n | Farb Parameter | | |
|---|---|---|---|---|---|---|
| | | | | L* | a* | b* |
| CA-25R | 8910 | 12,79 | 0,57 | 95,42 | -0,10 | 1,09 |
| CA-270 | 4120 | 16,39 | 0,68 | 93,86 | 0,00 | 0,38 |
| SECAR 71 | 4120 | 25,27 | 0,71 | 92,99 | 0,16 | 0,57 |
| TERNAL WHITE | 3890 | 24,85 | 0,85 | 94,01 | 0,00 | 0,59 |
| SECAR 80 | 8750 | 14,06 | 0,53 | 95,93 | -0,05 | -0,04 |
| GORKAL 70 | 4410 | 23,07 | 0,89 | 91,83 | 0,19 | 0,38 |
| ETZ 1 | 4323 | 13,60 | 1,29 | 93,08 | 0,27 | 0,66 |
| ETZ 2 | 4160 | 16,61 | 0,80 | 94,54 | 0,35 | 1,27 |

Aus Tabelle 6 wird der mit 39,0 % relativ hohe Wasseranspruch des erfindungsgemäßen Tonerdezements ETZ 1 zum Erreichen der Normsteife deutlich. Der nicht erfindungsgemäße Tonerdezement ETZ 2 bewegt sich mit 28 % im üblichen Rahmen. Betrachtet man die zugehörigen Körnungsparameter in Tabelle 7, wird erkennbar, dass sich die unterschiedlichen Wasseransprüche insbesondere auf das relativ hohe erfindungsgemäße Steigungsmaß von 1,29 beim erfindungsgemäßen Tonerdezement und das moderate nicht erfindungsgemäße Steigungsmaß von 0,80 beim nicht erfindungsgemäßen Tonerdezement zurückführen lassen. Die gemessenen Steigungsmaße n der handelsüblichen, weißen Vergleichstonerdezemente liegen zwischen 0,57 (CA-25R) und 0,89 (GORKAL 70). Man sieht, dass die Blainewerte dieser Zemente sehr unterschiedlich sind.

Die durchgeführten Analysen an Handelsware haben Stichprobencharakter und stellen keine repräsentativen Durchschnittszahlen dar. Nach der Erfahrung sind die europäischen Markenprodukte aber von hoher Gleichmäßigkeit, so dass diese Untersuchungen durchaus auf die Zusammensetzung der Zemente über längere Zeiträume hinweg schließen lassen.

### Beispiel 3

Mit dem erfindungsgemäßen Tonerdezement ETZ 1 wurden nach der Klassifikation in DIN EN ISO 1927-1 "Medium Cement Castables (MCC)", "Low Cement Castables (LCC)" und "Ultra Low Cement Castables (ULCC)" hergestellt und auf ihre Verarbeitungs- und Feuerfesteigenschaften geprüft. Als Vergleichsbindemittel in den jeweiligen Feuerbetonen wurden CA-270 (Fa. Almatis) und SECAR 71 (Fa. Kerneos) verwendet. Die Dosierung des erfindungsgemäßen Tonerdezements wurde dabei von mittleren zu niedrigen Werten gesenkt (max. 10 %, min. 3 %). Diese Versuche stehen stellvertretend für branchenübliche Versätze anderer Rezepturen. Die Zusammensetzungen der Rezepturen sind in Tabelle 8 wiedergegeben. Die mineralogische Zusammensetzung und die chemische Analyse der Tonerdezemente sind in den Tabellen 4 und 5 enthalten.

Die Rezepturen bestehen aus den Tonerdezementen als hydraulisches Bindemittel, Feinanteilen aus reaktiver- und kalzinierter Tonerde und Mikrosilica, sowie Sintertonerde (Tabulartonerde) in verschiedenen Körnungen.

Die Tonerdezementgehalte in den Rezepturen betrugen 10 % (MTS1, MTS2, MTS3), 5 % (MTS4, MTS5) und 3 % (MTS6). Die Versuche MTS1 bis MTS3 dienten dem direkten Vergleich des erfindungsgemäßen Tonerdezements mit SECAR 71 und CA-270 in einem MCC. In den Versuchen MTS4 bis MTS6 wurde die Leistungsfähigkeit des erfindungsgemäßen Tonerdezementes untersucht. Der Versuch MTS5 unterscheidet sich von MTS 4 durch eine um ca. 10 % geringere Wasserdosierung. Bei MTS6 wurden 3 % erfindungsgemäßer Tonerdezement eingesetzt. Mit Verringerung des erfindungsgemäßen Tonerdezementgehaltes wurde der Anteil an reaktiver und kalzinierter Tonerde in der Rezeptur erhöht.

Die Castables wurden wie folgt hergestellt: Jeweils 4000 g der Rezepturen MTS1 bis MTS6 wurden aus den Ausgangsstoffen entsprechend Tabelle 8 eingewogen und homogenisiert. Die Mischung wurde in den Trog eines Mörtelmischers nach EN 196 überführt. Nach Einschalten des Mischers auf Stufe 1 wurde die jeweilige Menge an entmineralisiertem Wasser innerhalb von 30 s gleichmäßig zugegeben. Danach wurde der Mischvorgang weitere 4 min auf Stufe 1 fortgesetzt.

**Tabelle 8: Feuerbetonrezepturen und Eigenschaften**

| **Rezeptur** | MTS 1 | MTS 2 | MTS 3 | MTS 4 | MTS 5 | MTS 6 |
|---|---|---|---|---|---|---|
| Gesamt CaO Gehalt im Castable | 3,0 % | 2,6 % | 3,5 % | 1,7 % | 1,7 % | 1,0 % |
| Castable Type nach DIN EN ISO 1927-1 | MCC | MCC | MCC | LCC | LCC | ULCC |

| **Komponenten** | | | | | | |
|---|---|---|---|---|---|---|
| SECAR 71, Kerneos | 10,0 % | | | | | |
| CA-270, Almatis | | 10,0 % | | | | |
| ETZ 1 | | | 10,0 % | 5,0 % | 5,0 % | 3,0 % |
| Reaktive Tonerde Fa. Almatis CL 370 | 2,5 % | 2,5 % | 2,5 % | 3,5 % | 3,5 % | 3,5 % |
| Kalzinierte Tonerde CT 9 FG, Fa. Almatis | 5,0 % | 5,0 % | 5,0 % | 9,0 % | 9,0 % | 11,0 % |
| Mikrosilica Q 1, Fa. RW silicium GmbH | 2,5 % | 2,5 % | 2,5 % | 2,5 % | 2,5 % | 2,5 % |
| Fließmittel Castament FS 60, Fa. BASF | 0,1 % | 0,1 % | 0,1 % | 0,1 % | 0,1 % | 0,1 % |
| Tabulartonerde T-60 0 - 0,5 mm, Fa. Almatis | 14,9 % | 14,9 % | 14,9 % | 14,9 % | 14,9 % | 14,9 % |
| Tabulartonerde T-60 0-1mm, Fa. Almatis | 27,5 % | 27,5 % | 27,5 % | 27,5 % | 27,5 % | 27,5 % |
| Tabulartonerde T-60 1 -3 mm, Fa. Almatis | 20,0 % | 20,0 % | 20,0 % | 20,0 % | 20,0 % | 20,0 % |
| Tabulartonerde T-60 3-6 mm, Fa. Almatis | 17,5 % | 17,5 % | 17,5 % | 17,5 % | 17,5 % | 17,5 % |
| Wasserzugabe zur Trockenmischung | 5,4 % | 5,4 % | 5,4 % | 5,4 % | 4,8 % | 5,2 % |

Unmittelbar nach Ende des Mischvorgangs wurde das Fließmaß des Feuerbetons unter Verwendung eines Setztrichters (EN 1015-3) und des Vibrationstisches A (EN 196-1) bestimmt. Die Bestimmung des Fließmaßes dient der Beurteilung des Verarbeitungsverhaltens. Der Setztrichter wurde dazu auf der metallischen, trockenen Platte des Rütteltisches mittig platziert. Der Feuerbeton wurde im Verlauf von 30 s unter Vibration gleichmäßig eingefüllt. Nach dem sofortigen Abstreifen und Anheben des Setztrichters wurde erneut 30 s vibriert. Danach wurde der Durchmesser des ausgebreiteten Feuerbetons mit dem Messschieber in zwei rechtwinklig zueinander stehenden Richtungen gemessen, die Messwerte auf 1 mm gerundet und das Fließmaß a5 in mm bestimmt. Jeweils 15 und 30 min nach Beginn des Mischens wurde der Messvorgang am geschützt gelagerten Feuerbeton in gleicher Weise wiederholt und so die Fließmaße a15 und a30 bestimmt.

Zur Druckfestigkeitsprüfung wurden die Feuerbetone in gleicher Weise, wie oben beschrieben, hergestellt. Die Herstellung der Normenprismen (4 cm x 4 cm x 16 cm) und die Messung der Kaltdruck- und Kaltbiegezugfestigkeiten erfolgte nach EN 196-1. Die Lagerung der Prismen erfolgte unter Normbedingungen für 48 h an Luft, danach 24 h bei 110 °C im Trockenschrank mit anschließendem Abkühlen auf 20 °C. An diesen Prismen erfolgte die Bestimmung der Rohdichte, die Kaltbiege- und Kaltdruckfestigkeit nach 110 °C, die thermische Behandlung bei 1000 °C und 1250 °C nach EN 1402-5 und die nachfolgende Bestimmung der Rohdichte. Die Kaltbiegefestigkeit und Kaltdruckfestigkeit wurde nach EN 196-1 durchgeführt.

Die Messergebnisse sind in Tabelle 9 zusammengestellt.

**Tabelle 9: Eigenschaften der Castables**

| **Rezeptur** | MTS 1 | MTS 2 | MTS 3 | MTS 4 | MTS 5 | MTS 6 |
|---|---|---|---|---|---|---|
| Fließmaß a5 [mm] | 233 | 185 | 261 | 262 | 236 | 255 |
| Fließmaß a15 [mm] | 235 | 153 | 245 | 247 | 214 | 245 |
| Fließmaß a30 [mm] | 217 | 215 | 224 | 238 | 210 | 220 |
| Rohdichte nach 110°C [g/cm³] | 3,03 | 2,99 | 3,11 | 3,09 | 3,14 | 3,09 |
| Kaltbiegefestigkeit nach 110 °C [MPa] | 16,8 | 11,1 | 17,9 | 15,1 | 15,4 | 9,4 |
| Kaltdruckfestigkeit nach 110 °C [MPa] | 142,1 | 65,0 | 185,8 | 104,3 | 161,6 | 118,1 |
| Rohdichte nach 1000°C [g/cm³] | 2,97 | 2,94 | 3,02 | 3,02 | 3,08 | 3,05 |
| Kaltbiegefestigkeit nach 1000°C [MPa] | 17,9 | 17,3 | 18,5 | 22,4 | 21,5 | 13,8 |
| Kaltdruckfestigkeit nach 1000°C [MPa] | 130,6 | 93,3 | 147,5 | 145,2 | 153,6 | 135,1 |
| Rohdichte nach 1250°C [g/cm³] | 2,97 | 2,94 | 3,01 | 3,02 | 3,08 | 3,05 |
| Kaltbiegefestigkeit nach 1250°C [MPa] | 18,2 | 19,4 | 20,2 | >23,3 | >23,3 | >23,3 |
| Kaltdruckfestigkeit nach 1250°C [MPa] | 129,8 | 105,9 | 152,0 | 141,4 | 168,4 | 171,6 |

Die Ansätze MTS 1 bis MTS3 zeigen, dass der erfindungsgemäße Tonerdezement in Rezeptur MTS3 bei gleich bleibendem Zement- und Wassergehalt das beste Fließmaß zu allen Prüfzeitpunkten besitzt.

Die Kaltbiege- und Kaltdruckfestigkeiten bei MTS3 liegen nach allen Vorbehandlungstemperaturen im Vergleich zu den Ansätzen mit den beiden handelsüblichen Tonerdezementen (MTS1 und MTS2) deutlich höher.

Basierend auf diesen Ergebnissen wurde die Dosierung des erfindungsgemäßen Tonerdezements schrittweise auf 5 % (MTS4 und MTS5) und 3 % (MTS6) vermindert. MTS4 mit 5 % erfindungsgemäßem Tonerdezementgehalt zeigte zu allen Messzeitpunkten ein verbessertes Fließverhalten gegenüber MTS1, MTS2 und MTS3. Die Kaltdruckfestigkeiten nach 1000 °C und 1250 °C liegen bei MTS4 mit dem auf 5 % halbierten Gehalt an erfindungsgemäßen Tonerdezement gegenüber MTS 3 mit 10 % erfindungsgemäßem Tonerdezement, geringfügig niedriger, gegenüber MTS1 und MTS2 mit 10 % handelsüblichen Tonerdezementen aber deutlich höher.

Da MTS4 mit einem Wassergehalt von 5,4 % immer noch sehr gute Verlaufseigenschaften aufwies, wurde der Ansatz MTS5 mit einem um relativ 10% auf 4,8% verringerten Wassergehalt wiederholt. MTS5 zeigte bei immer noch gutem Fließverhalten eine deutliche Steigerung der Kaltdruckfestigkeiten nach allen Temperaturen in Vergleich zu MTS4.

In einem weiteren Schritt wurde der Zementgehalt weiter reduziert in Richtung Ultra Low Cement Castable (MTS6). Hier zeigte sich überraschenderweise, dass selbst bei einer Reduzierung auf 30 % der Ausgangsmenge, was einer Senkung des Zementgehalts um absolut 7 % im Vergleich zu MTS3 entspricht, ein exzellentes Fließverhalten und die höchste Kaltdruckfestigkeit nach 1250 °C Vorbrand erzielt wird. Die Festigkeitswerte von MTS6 liegen speziell nach Vorbrand 1250 °C sehr deutlich über denen der Vergleichszemente und erfüllen somit die Ansprüche, die an qualitativ hochwertige, feuerfeste Betone gestellt werden.

Die Untersuchungsergebnisse an den Feuerbetonen MTS3 bis MTS6 zeigen, dass bei Verwendung des erfindungsgemäßen Tonerdezements der Bindemittelgehalt in den üblichen MCC, LCC und ULCC gesenkt werden kann und generell qualitativ höherwertige Feuerbetone im Vergleich zum Stand der Technik hergestellt werden können.

### Beispiel 4

In einer Druckerweichungsprüfung nach DIN EN ISO 1893 wurde der erfindungsgemäße Tonerdezement dem handelsüblichen Tonderdezement CA-270 (Fa. Almatis) gegenüber gestellt. Der Zementgehalt in den Rezepturen wurde mit 5 % CA-270 und 3 % erfindungsgemäßem Tonerdezement so gewählt, dass in beiden Rezepturen der gleiche Gehalt von 2,9 % an Monocalciumaluminat (CA) vorhanden war. Ziel dieser Vorgehensweise war es, den Gehalt an hydraulisch aktiven, früh druckfestigkeitsbildenden Calciumaluminatphasen zu normieren. Die Gesamtrezeptur mit dem CA-270 entsprach MTS 4 aus Tabelle 8. Die Gesamtrezeptur mit dem erfindungsgemäßen Tonerdezement entsprach MTS6 aus Tabelle 8. Abweichend davon wurde in beiden Rezepturen 4,0 % Wasser eingesetzt. Die thermische Vorbehandlung für die Kaltdruckfestigkeit nach 1000 °C erfolgte nach EN 1402-5 und die Festigkeitsbestimmung nach EN 196-1.

Das Druckerweichen beurteilt das Erweichungsverhalten von feuerfesten Werkstoffen bei steigender Temperatur unter konstanter Belastung. Dₘₐₓ gibt dabei die maximale Dehnung des Probekörpers bei der Temperatur T_{Dmax} an. Ausgehend von T_{Dmax} geben die Punkte T05 bis T5 Temperaturen an, bei denen der Probekörper eine Verformung (Stauchung) von 0,5 % (T05), 1 % (T1), 2 % (T2) oder 5 % (T5) erfahren hat. Als konstante Auflast wurde 0,2 MPa gewählt. Die Rezepturen und Ergebnisse der Druckerweichungsprüfung sind in Tabelle 10 angegeben.

**Tabelle 10: Druckerweichen nach DIN EN ISO 1893**

| | MTS 4 | MTS 6 |
|---|---|---|
| CA-270 (Fa. Almatis) | 5,0 % | |
| ETZ 1 | | 3,0 % |
| Monocalciumaluminat (CA) | 2,9% | 2,9 % |
| Wasserzugabe zur Trockenmischung | 4,0% | 4,0 % |
| T_{Dmax[}°C] | 1328 | 1331 |
| Dₘₐₓ [%] | 0,92 | 0,85 |
| T05 [°C] | 1441 | 1442 |
| T1[°C] | 1459 | 1462 |
| T2[°C] | 1477 | 1481 |
| T5 [°C] | 1522 | 1532 |
| Kaltdruckfestigkeit nach 1000 °C [MPa] | 166,5 | 203,0 |

Die Werte T05 bis T5 in Tabelle 10 zeigen, dass der erfindungsgemäße Tonerdezement im Vergleich zum handelsüblichen, weißen Tonerdezement CA-270 (Fa. Almatis), bei gleichem frühfestigkeitsbildendem Monocalciumaluminatgehalt (CA) von 2,9 % in der Rezeptur, eine gleiche oder höhere Feuerfestigkeit aufweist. Der absolute erfindungsgemäße Tonerdezementgehalt liegt nur bei 60 % des Gehaltes an handelsüblichem Tonerdezement (CA-270, Fa. Almatis).

### Beispiel 5

Mit dem erfindungsgemäßen Tonerdezement wurden unter Verwendung von reaktiver Tonerde CL 370, kalzinierter Tonerde, CT 9 FG und Tabulartonerde T-60 (alle Fa. Almatis) sowie des Fließmittels Castament FS 60, Fa. BASF "Regular Cement Castables, RCC" nach DIN EN ISO 1927-1 hergestellt. Die Einordnung als RCC erfolgte trotz Fließmittelverwendung aufgrund der fehlenden Zugabe von Feinststoff < 1µm. Die Herstellung, das Anmischen und die Prüfung des Feuerbetons erfolgte analog der Vorgehensweise in Beispiel 3. Als Vergleichszement wurde SECAR 80 verwendet. Die Dosierung des erfindungsgemäßen Tonerdezements wurde dabei von hohen zu mittleren Werten gesenkt (max. 20 %, min. 12,5 %). Die Eigenschaften des RCC's mit SECAR 80 wurden als Zielwerte betrachtet. Tabelle 11 listet die Rezepturen und Ergebnisse auf.

**Tabelle 11: Feuerbetonrezepturen RCC**

| | Bezeichnung der Feuerbeton Rezepturen | | |
|---|---|---|---|
| | RA 1 | RA 2 | RA 3 |
| Gehalt CaO | 3,3% | 6,9% | 4,3% |
| Castable Type nach DIN EN ISO 1927-1* | RCC | RCC | RCC |
| | | | |
| REZEPTUR | | | |
| SECAR 80, Kerneos | 20,0 % | | |
| ETZ 1 | | 20,0 % | 12,5% |
| Reaktive Tonerde CL 370 | - | - | 1,5% |
| Kalzinierte Tonerde CT 9 FG | - | - | 3,5% |
| Fließmittel | 0,3% | 0,3% | 0,3% |
| Tabulartonerde 0-0,5 mm | 14,7% | 14,7% | 17,2 % |
| Tabulartonerde 0-1 mm | 30,0 % | 30,0% | 30,0 % |
| Tabulartonerde 1-3 mm | 20,0 % | 20,0 % | 20,0 % |
| Tabulartonerde 3-6 mm | 15,0 % | 15,0% | 15,0 % |
| Wasserzugabe | 8,3 % | 6,3 % | 6,6 % |
| Fließmaß a5 [mm] | 247 | 270 | 287 |
| Fließmaß a15 [mm] | 246 | 240 | 262 |
| Fließmaß a30 [mm] | 260 | 222 | 253 |
| Kaltbiegefestigkeit nach 110°C [N/mm2] | 14,3 | 17,3 | 18,9 |
| Kaltdruckfestgkeit nach 110°C [N/mm2] | 81,8 | >125 | >125 |
| Rohdichte nach 1000°C | 2,80 | 2,92 | 2,97 |
| Kaltbiegefestigkeit nach 1000°C [N/mm2] | 3,6 | 2,9 | 4,5 |
| Kaltdruckfestgkeit nach 1000°C [N/mm2] | 48,8 | 69,1 | 96,1 |
| Rohdichte nach 1250°C | 2,85 | 2,92 | 2,95 |
| Kaltbiegefestigkeit nach 1250°C [N/mm2] | 2,8 | 2,4 | 2,8 |
| Kaltdruckfestgkeit nach 1250°C [N/mm2] | 57,1 | 71,1 | 76,7 |

| | | | |
|---|---|---|---|
| * Abweichend von DIN EN ISO 1927-1 mit Fließmittel | | | |

Man erkennt, dass im Vergleich der Rezepturen RA1 und RA2 der erfindungsgemäße Tonerdezement zu einem besseren Fließmaß bei einer um 24 % geringeren Wasserdosierung führt. Bei Verringerung des Bindemittels um 37,5 % von absolut 20 % auf 12,5 % in RA 3, bleibt das Fließverhalten unverändert gut, bei praktisch gleichem Wassergehalt wie RA2. Die Kaltdruckfestigkeiten nach allen Vorbehandlungstemperaturen liegen bei den Rezepturen mit dem erfindungsgemäßen Tonerdezement (RA2, RA3) deutlich höher, als bei Verwendung des handelsüblichen Tonerdezements.

### Beispiel 6

Mit dem erfindungsgemäßen Tonerdezement wurden unterschiedliche bauchemische Mischungen als selbstverlaufende Spachtelmasse hergestellt, unter Verwendung branchenüblicher Bindemittelbestandteile, Additive und Füllstoffe, wie sie für Produkte im Bereich Fliesenkleber, Ausgleichsmassen, Spachtelmassen und Reparaturmörtel typisch sind. Unter den bauchemischen Rezepturen ist die selbstverlaufende Spachtelmasse ein besonders anspruchsvolles Produkt. Einerseits sollen diese Rezepturen einen guten bis sehr guten Verlauf über die Verarbeitungszeit von 30 min besitzen, andererseits müssen sie eine hohe Frühfestigkeit und schnelle Begehbarkeit gewährleisten. In der Regel weisen die qualitativ hochwertigen selbstverlaufenden Spachtelmassen einen hohen Tonerdezementgehalt auf.

Die Zusammensetzung der verschiedenen Rezepturen ist in den drei Tabellen 12, 13 und 14 vollständig wiedergegeben. Die Rezepturbestandteile werden dabei unterteilt in "Bindemittel", "Additive I und II" und "Füllstoffe". Jede der drei Grundrezepturen wurde mit drei Tonderdezementen ausgeführt: dem erfindungsgemäßen Tonerdezement, dem weißen Vergleichszement SECAR 71 (Fa. Kerneos) und dem eisenreichen Vergleichszement Istra 40 (Fa. Calucem).

Die drei Mischungen wurden jeweils mit 2 unterschiedlichen Bindemittelgehalten hergestellt und über einen Zeitraum von 30 Minuten nach ihrer Herstellung durch das Messen der Ausbreitmaße a5, a15 und a30 auf ihre Konsistenz, sowie an Normenprismen 4 cm x 4 cm x16 cm auf ihre Druckfestigkeitsentwicklung nach 4 h, 6 h und 24 h geprüft. Im Folgenden werden die in den Tabellen 12, 13 und 14 verwendeten Begriffe und Abkürzungen erläutert.

Unter "Bindemittel" werden die Rezepturanteile: Portlandzement (OPC) Dyckerhoff Weiß Strong CEM I 52,5 R, Fa. Dyckerhoff, Tonerdezement (CAC) und Calciumsulfat (HH) Alpha - Halbhydrat Special 40 W, Fa. Casea verstanden.

Als "Additive I" sind die Zusätze mit primär verzögernder und beschleunigender Wirkung bezeichnet: Weinsäure L(+) p.a. (WS), Fa. Neolab Art.-Nr5120; Natriumcarbonat wfr. p.a. (NaC), Fa Neolab Art.-Nr. 4750; und Lithiumcarbonat rein. (LiC), Fa Merck Art.-Nr. 5670.

"Additive II" sind diejenigen Zusätze, die primär Einfluss auf die Konsistenz der Mischung ausüben: Kalkhydrat p.a. (CH), Fa Neolab Art.-Nr. 3630; Verflüssiger Melflux 2641 F (VF), Fa BASF; Celluloseether Culminal MHPC-500 PF (CE), Fa. Ashland; und Entschäumer Agitan P 801 (ES), Fa. Münzing Chemie GmbH.

Als Füllstoffe (F) sind inerte, nicht an den hydraulischen Reaktionen beteiligte Materialien bezeichnet. In den Beispielen wurden Quarzsand F33 (F1), Fa. Quarzwerke GmbH und Quarzmehl Millisil W3 (F2), Fa. Quarzwerke GmbH eingesetzt.

Alle in den Tabellen 12-14 angegebenen Prozentwerte beziehen sich auf den prozentualen Anteil einer Komponente am Gesamtgewicht der Mischung. Der primäre Unterschied zwischen den Versuchsreihen liegt im Verhältnis der Bindemittelkomponenten OPC, CAC und HH zueinander.

Alle bauchemischen Mischungen wurden mit einem konstanten Wasser/Feststoffwert (W/F-Wert) von 0,21 angemacht.

Innerhalb einer Rezeptur mit gegebenem Bindemittelanteil wurde außer der Variation des Tonerdezementes und der zum Einstellen des Erstarrungsanfangs der angemachten Mischungen auf 40 ± 5 Minuten erforderlichen, geringfügigen Anpassungen der Verzögerer- und Kalkhydratgehalte keine wesentliche Änderung vorgenommen.

Die Prüfung des Ausbreitmaßes erfolgte in der Weise, dass jeweils 2000 g der trockenen Rezepturmischung exakt eingewogen und in einem Mörtelmischer nach EN 196 mit 420 g entmineralisiertem Wasser 30 Sekunden auf Stufe I und danach 90 Sekunden auf Stufe II angemischt wurden. Das Anmachwasser wurde dazu im Mischertrog vorgelegt und anschließend die Trockenmischung zugegeben. Die erhaltene gießfähige Mischung wurde sofort auf 3 Auslaufringe, d.h. ringförmige Aluminiumgefäße von 35 mm Höhe und einem inneren Durchmesser von 68 mm, verteilt, die zentriert auf 3 mit konzentrischen Graduierungen versehenen, trockenen Ausbreitplatten aus Plexiglas angeordnet waren. 5 Minuten nach Mischbeginn, wurde der erste Ring angehoben und der Durchmesser der kreisförmig verlaufenen Masse als Mittelwert aus zwei senkrecht zueinander stehenden Messungen mit dem Messschieber, als a5 Wert ermittelt. In gleicher Weise wurde nach 15 und 30 Minuten mit den beiden anderen Ringen verfahren und die Werte a15 und a30 ermittelt.

Zur Ermittlung der Druckfestigkeit nach 4, 6 und 24 h wurden die bauchemischen Mischungen in gleicher Weise hergestellt und die gießfähigen Materialien nach Mischende ohne zusätzliche Verdichtungsmaßnahmen in Prismenformen nach EN 196 eingefüllt. Die Formen wurden entsprechend EN 196 gelagert und die Prismen normgemäß zu den vorgesehenen Terminen geprüft.

In der Tabelle 12 ist der erfindungsgemäße Tonerdezement ETZ 1 einem SECAR 71 und einem Istra 40 in einer Spachtelmasse mit hohem Tonerdezementanteil und mittlerem Calciumsulfatanteil im Bindemittel gegenübergestellt. Das Bindemittel umfasste hierbei 15 % OPC, 60 % CAC und 25 % HH. Das Verhältnis OPC/CAC betrug 0,25 und das Verhältnis CAC/HH 2,40. Die Rezeptur wurde mit einem Bindemittelgehalt von 30 % und 20 % ausgeführt.

**Tabelle 12: Spachtelmasse mit hohem Tonerdezementgehalt und mittlerem Gehalt an Calciumsulfat**

| Tonerdezement | ETZ1 | Istra 40 | SECAR 71 | ETZ1 | Istra 40 | SECAR 71 |
|---|---|---|---|---|---|---|
| Rezeptur | | | | | | |
| OPC [%] | 4,50 | 4,50 | 4,50 | 3,00 | 3,00 | 3,00 |
| CAC [%] | 18,00 | 18,00 | 18,00 | 12,00 | 12,00 | 12,00 |
| HH [%] | 7,50 | 7,50 | 7,50 | 5,00 | 5,00 | 5,00 |
| Summe Bindemittel | 30,00 | 30,00 | 30,00 | 20,00 | 20,00 | 20,00 |
| Additive I | | | | | | |
| WS[%] | 0,21 | 0,11 | 0,11 | 0,14 | 0,07 | 0,07 |
| NaC [%] | 0,36 | 0,21 | 0,21 | 0,26 | 0,16 | 0,16 |
| LiC [%] | 0,03 | 0,03 | 0,03 | 0,02 | 0,02 | 0,02 |
| Additive II | | | | | | |
| CH [%] | 1,17 | 1,17 | 1,17 | 0,80 | 0,80 | 0,80 |
| VF [%] | 0,15 | 0,15 | 0,15 | 0,10 | 0,10 | 0,10 |
| CE [%] | 0,07 | 0,07 | 0,07 | 0,08 | 0,08 | 0,08 |
| ES [%] | 0,11 | 0,11 | 0,11 | 0,12 | 0,12 | 0,12 |
| Füllstoffe | | | | | | |
| F1 [%] | 47,53 | 47,70 | 47,70 | 54,94 | 55,05 | 55,05 |
| F2 [%] | 20,37 | 20,45 | 20,45 | 23,54 | 23,60 | 23,60 |
| W/F-Wert | 0,21 | 0,21 | 0,21 | 0,21 | 0,21 | 0,21 |

| Ausbreitmaß | | | | | | |
|---|---|---|---|---|---|---|
| a5 [mm] | 225 | 221 | 223 | 209 | 202 | 205 |
| a15 [mm] | 228 | 217 | 226 | 206 | 205 | 200 |
| a30 [mm] | 210 | 189 | 202 | 206 | 170 | 190 |

| Druckfestigkeit | | | | | | |
|---|---|---|---|---|---|---|
| 4 h [MPa] | 28,3 | 7,1 | 18,5 | 16,0 | 5,4 | 11,3 |
| 6 h [MPa] | 28,6 | 7,4 | 23,6 | 17,3 | 10,9 | 14,3 |
| 24 h [MPa] | 32,0 | 7,4 | 28,1 | 20,7 | 11,5 | 17,8 |

Die gefundenen Ausbreitmaße zeigen sowohl für die bindemittelreichere Spachtelmasse (30%), als auch für die bindemittelärmere (20%) die bessere Fließfähigkeit und die erheblich stärkere Frühfestigkeitsentwicklung bis 24h bei Verwendung des erfindungsgemäßen Tonerdezementes im Vergleich zu den beiden handelsüblichen Vergleichszementen.

In der Tabelle 13 ist der erfindungsgemäße Tonerdezement einem SECAR 71 und einem Istra 40 in einer Spachtelmasse mit mittlerem Tonerdezementanteil und mittlerem Calciumsulfatanteil im Bindemittel gegenübergestellt. Das Bindemittel umfasste hierbei 22,7 % OPC, 54,6 % CAC und 22,7 % HH. Das Verhältnis OPC/CAC betrug 0,42 und das Verhältnis CAC/HH 2,40. Die Rezeptur wurde mit einem Bindemittelgehalt von 30 % und 25 % ausgeführt.

**Tabelle 13: Spachtelmasse mit mittlerem Tonerdezementgehalt und mittlerem Gehalt an Calciumsulfat**

| Tonerdezement | ETZ1 | Istra 40 | SECAR 71 | ETZ1 | Istra 40 | SECAR 71 |
|---|---|---|---|---|---|---|
| Rezeptur | | | | | | |
| OPC [%] | 6,82 | 6,82 | 6,82 | 5,68 | 5,68 | 5,68 |
| CAC [%] | 16,37 | 16,37 | 16,37 | 13,64 | 13,64 | 13,64 |
| HH [%] | 6,81 | 6,81 | 6,81 | 5,68 | 5,68 | 5,68 |
| Summe Bindemittel | 30,00 | 30,00 | 30,00 | 25,00 | 25,00 | 25,00 |
| Additive I | | | | | | |
| WS[%] | 0,18 | 0,11 | 0,11 | 0,15 | 0,09 | 0,09 |
| NaC [%] | 0,33 | 0,21 | 0,21 | 0,28 | 0,18 | 0,18 |
| LiC [%] | 0,03 | 0,03 | 0,03 | 0,03 | 0,03 | 0,03 |
| Additive II | | | | | | |
| CH [%] | 1,17 | 1,17 | 1,17 | 0,98 | 0,98 | 0,98 |
| VF [%] | 0,15 | 0,15 | 0,15 | 0,15 | 0,15 | 0,15 |
| CE [%] | 0,07 | 0,07 | 0,07 | 0,08 | 0,08 | 0,08 |
| ES [%] | 0,11 | 0,11 | 0,11 | 0,11 | 0,11 | 0,11 |
| Füllstoffe | | | | | | |
| F1 [%] | 47,57 | 47,70 | 47,70 | 51,25 | 51,36 | 51,36 |
| F2[%] | 20,39 | 20,45 | 20,45 | 21,97 | 22,02 | 22,02 |
| W/F-Wert | 0,21 | 0,21 | 0,21 | 0,21 | 0,21 | 0,21 |

| Ausbreitmaß | | | | | | |
|---|---|---|---|---|---|---|
| a5 [mm] | 228 | 223 | 224 | 230 | 218 | 213 |
| a15 [mm] | 230 | 234 | 213 | 231 | 213 | 220 |
| a30 [mm] | 211 | 202 | 178 | 193 | 156 | 199 |

| Druckfestigkeit | | | | | | |
|---|---|---|---|---|---|---|
| 4 h [MPa] | 25,3 | 8,7 | 10,2 | 19,8 | 9,2 | 14,3 |
| 6 h [MPa] | 27,4 | 9,2 | 21,4 | 22,9 | 11,2 | 17,8 |
| 24 h [MPa] | 29,4 | 9,4 | 24,1 | 26,3 | 12,1 | 23,4 |

Auch an der Rezeptur mit mittlerem Tonerdezementgehalt und mittlerem Gehalt an Calciumsulfat zeigt der erfindungsgemäße Tonerdezement seine vorteilhaften Eigenschaften gegenüber dem Stand der Technik anhand der größeren Ausbreitmaße und der erheblich stärkeren Frühfestigkeitsentwicklung bis 24 h im Vergleich zu den beiden Vergleichszementen Istra 40 und SECAR 71.

In der Tabelle 14 ist der erfindungsgemäße Tonerdezement einem SECAR 71 und einem Istra 40 in einer Spachtelmasse mit mittlerem Tonerdezementanteil und hohem Calciumsulfatanteil im Bindemittel gegenübergestellt. Das Bindemittel umfasste hierbei 20,4 % OPC, 49,6 % CAC und 30,0 % HH. Das Verhältnis OPC/CAC betrug 0,41 und das Verhältnis CAC/HH 1,65. Die Rezeptur wurde mit einem Bindemittelgehalt von 30 % und 20 % ausgeführt.

Innerhalb der Rezepturen mit dem höheren Bindemittelgehalt von 30 % wurde dem erfindungsgemäßen Tonerdezement ETZ 1 zusätzlich der nichterfindungsgemäße Tonerdezement ETZ 2 gegenübergestellt. Der nichterfindungsgemäße Tonerdezement wurde aus dem erfindungsgemäßen Tonerdezementklinker ETZ/K2 ermahlen, wobei bei einer spezifischen Oberfläche nach Blaine von 4160 cm²/g ein Lageparameter x' von 16,61 und ein nicht erfindungsgemäßes Steigungsmaß n von 0,80 eingestellt wurde.

**Tabelle 14:Spachtelmasse mit mittlerem Tonerdezementgehalt und hohem Gehalt an Calciumsulfat**

| Tonerdezement | ETZ 1 | ETZ2 | Istra 40 | SECAR 71 | ETZ 1 | Istra 40 | SECAR 71 |
|---|---|---|---|---|---|---|---|
| Rezeptur | | | | | | | |
| OPC [%] | 6,12 | 6,12 | 6,12 | 6,12 | 4,08 | 4,08 | 4,08 |
| CAC [%] | 14,88 | 14,88 | 14,88 | 14,88 | 9,92 | 9,92 | 9,92 |
| HH [%] | 9,00 | 9,00 | 9,00 | 9,00 | 6,00 | 6,00 | 6,00 |
| Bindemittelgehalt | 30,00 | 30,00 | 30,00 | 30,00 | 20,00 | 20,00 | 20,00 |
| Additive I | | | | | | | |
| WS [%] | 0,18 | 0,18 | 0,11 | 0,11 | 0,12 | 0,08 | 0,08 |
| NaC [%] | 0,33 | 0,33 | 0,21 | 0,21 | 0,24 | 0,16 | 0,16 |
| LiC [%] | 0,03 | 0,03 | 0,03 | 0,03 | 0,02 | 0,02 | 0,02 |
| Additive II | | | | | | | |
| CH [%] | 1,17 | 1,17 | 1,17 | 1,17 | 0,78 | 0,78 | 0,78 |
| VF [%] | 0,15 | 0,15 | 0,15 | 0,15 | 0,10 | 0,10 | 0,10 |
| CE [%] | 0,07 | 0,07 | 0,07 | 0,07 | 0,08 | 0,08 | 0,08 |
| ES [%] | 0,11 | 0,11 | 0,11 | 0,11 | 0,12 | 0,12 | 0,12 |

| Tonerdezement | ETZ 1 | ETZ 2 | Istra 40 | SECAR 71 | ETZ 1 | Istra 40 | SECAR 71 |
|---|---|---|---|---|---|---|---|
| Füllstoffe | | | | | | | |
| F1 [%] | 47,57 | 47,57 | 47,70 | 47,70 | 54,98 | 55,06 | 55,06 |
| F2 [%] | 20,39 | 20,39 | 20,45 | 20,45 | 23,56 | 23,60 | 23,60 |
| W/F-Wert | 0,21 | 0,21 | 0,21 | 0,21 | 0,21 | 0,21 | 0,21 |

| Ausbreitmaß | | | | | | | |
|---|---|---|---|---|---|---|---|
| a5 [mm] | 228 | 209 | 227 | 226 | 215 | 203 | 199 |
| a15 [mm] | 223 | 205 | 226 | 223 | 210 | 201 | 195 |
| a30 [mm] | 215 | 189 | 196 | 193 | 190 | 163 | 148 |

| Druckfestigkeit | | | | | | | |
|---|---|---|---|---|---|---|---|
| 4 h [MPa] | 30,2 | 15,7 | 5,8 | 7,0 | 18,8 | 1,5 | 4,1 |
| 6 h [MPa] | 39,5 | 37,0 | 5,7 | 7,5 | 22,5 | 3,1 | 4,8 |
| 24 h [MPa] | 45,8 | 40,0 | 6,9 | 7,1 | 24,9 | 4,3 | 5,3 |

Wie bei den Rezepturen mit mittlerem und hohem Tonerdezementgehalt bei mittlerem Gehalt an Calciumsulfat, bestätigen sich auch in der Rezeptur mit hohem Gehalt an Calciumsulfat in vergleichbarer Weise die Vorteile, die gegenüber den beiden handelsüblichen Tonerdezementen SECAR 71 und Istra 40 durch Verwendung des erfindungsgemäßen Tonerdezementes erreichbar sind. Zusätzlich wird in der Tabelle 14 am Beispiel der bindemittelreichen (30 %) Rezeptur gezeigt, dass diese Vorteile bei einem aus einem erfindungsgemäßen Klinker hergestellten Tonerdezement bei Einstellung des erfindungsgemäßen Steigungsmaßes von n = 1,29 deutlich größer sind, als bei einem nicht erfindungsgemäßen Steigungsmaß von n = 0,80.

## Patentansprüche

1. Weißer Tonerdezement, **dadurch gekennzeichnet, dass** er mindestens 90 Gew.-% Monocalciumaluminat enthält, einen A/C-Wert im Bereich von 1,75 bis 2,0, eine Mahlfeinheit nach Blaine im Bereich von 3500 bis 6000 cm²/g, ein Steigungsmaß n im Bereich von 1,1 bis 1,5 und einen Lageparameter x' von 8-20 µm in einem RRSB Körnungsnetz nach DIN 66145 aufweist.

2. Tonerdezement gemäß Anspruch 1, **dadurch gekennzeichnet, dass** er ≤ 3 Gew.-% C₁₂A₇, vorzugsweise ≤ 2 Gew.-% C₁₂A₇ und besonders bevorzugt ≤ 1 Gew.-% C₁₂A₇ enthält.

3. Tonerdezement gemäß Anspruch 1 oder 2, **dadurch gekennzeichnet, dass** er ≤ 7 Gew.-% CA₂, vorzugsweise ≤ 6 Gew.-% CA₂ und besonders bevorzugt ≤ 4 Gew.-% CA₂ enthält.

4. Tonerdezement gemäß Anspruch 1, 2 oder 3, **dadurch gekennzeichnet, dass** er ≥ 92 Gew.-% CA, vorzugsweise ≥ 95 Gew.-% CA enthält.

5. Tonerdezement gemäß mindestens einem der Ansprüche 1 bis 4, **dadurch gekennzeichnet, dass** seine Farbe im L*a*b* Farbsystem innerhalb der Wertebereiche: L* = 92 ± 4, bevorzugt 93 ± 2; a*= -0,6 bis +0,7 und b* = -0,6 bis +2,5 liegt.

6. Tonerdezement gemäß mindestens einem der Ansprüche 1 bis 5, **dadurch gekennzeichnet, dass** er≤ 0,3 Gew.-% Eisen berechnet als Fe₂O₃ enthält, vorzugsweise ≤ 0,2 Gew.-%, besonders bevorzugt ≤ 0,1 Gew.-%.

7. Tonerdezement gemäß mindestens einem der Ansprüche 1 bis 6, **dadurch gekennzeichnet, dass** das Steigungsmaß n im Bereich von 1,15 bis 1,40, vorzugsweise im Bereich von 1,20 bis 1,30 liegt.

8. Tonerdezement gemäß mindestens einem der Ansprüche 1 bis 7, **dadurch gekennzeichnet, dass** der Lageparameter x' im Bereich von 10 bis 18 µm, vorzugsweise im Bereich von 11 bis 17 µm liegt.

9. Tonerdezement gemäß mindestens einem der Ansprüche 1 bis 8, **dadurch gekennzeichnet, dass** er eine Feinheit nach Blaine im Bereich von 4000 bis 5000 cm²/g, vorzugsweise 4200 bis 4800 cm²/g aufweist.

10. Verwendung eines Tonerdezements gemäß einem der Ansprüche 1 bis 9 als Bindemittelkomponente in Rezepturen der bauchemischen Industrie.

11. Verwendung eines Tonerdezements gemäß einem der Ansprüche 1 bis 9 als Bindemittelkomponente in Rezepturen der Feuerfestindustrie.

## Claims

1. White calcium aluminate cement **characterised in that** it contains at least 90 % by weight of monocalcium aluminate, has an A/C value in the range of 1.75 to 2.0, a fineness according to Blaine in the range of 3500 to 6000 cm²/g, a slope n in the range of 1.1 to 1.5 and a location parameter x' of 8 - 20 µm in an RRSB particle size grid according to DIN 66145.

2. Calcium aluminate cement according to claim 1, **characterised in that** it contains ≤ 3 % by weight of C₁₂A₇, preferably ≤ 2 % by weight of C₁₂A₇ and particularly preferred ≤ 1 % by weight of C₁₂A₇.

3. Calcium aluminate cement according to claim 1 or 2, **characterised in that** it contains ≤ 7 % by weight of CA₂, preferred ≤ 6 % by weight of CA₂ and particularly preferred ≤ 4 % by weight of CA₂.

4. Calcium aluminate cement according to claim 1, 2 or 3, **characterised in that** it contains ≥ 92 % by weight of CA, preferably ≥ 95 % by weight of CA.

5. Calcium aluminate cement according to at least one of the claims 1 to 4, **characterised in that** its colour in the L*a*b* colour system is within the value ranges: L* = 92 ± 4, preferably 93 ± 2, a* = -0.6 to +0.7 and b* = -0.6 to +2.5.

6. Calcium aluminate cement according to at least one of claims 1 to 5, **characterised in that** it contains ≤ 0.3 % by weight of iron, calculated as Fe₂O₃, preferably ≤ 0.2 % by weight, particularly preferred ≤ 0.1 % by weight.

7. Calcium aluminate cement according to at least one of claims 1 to 6, **characterised in that** the slope n is in the range of 1.15 to 1.40, preferably in the range from 1.20 to 1.30.

8. Calcium aluminate cement according to at least one of claims 1 to 7, **characterised in that** the location parameter x' is in the range of 10 to 18 µm, preferably in the range of 11 to 17 µm.

9. Calcium aluminate cement according to at least one of claims 1 to 8, **characterised in that** it has a fineness according to Blaine in the range of 4000 to 5000 cm²/g, preferably 4200 to 4800 cm²/g.

10. Use of a calcium aluminate cement in accordance with one of the claims 1 to 9 as binder component in formulations of the construction chemical industry.

11. Use of a calcium aluminate cement in accordance with one of the claims 1 to 9 as binder component in formulations of the refractory industry.

## Revendications

1. Ciment alumineux blanc, **caractérisé en ce qu'**il contient au moins 90 % en poids de aluminate monocalcique, et présente une valeur A/C dans la plage de 1,75 à 2,0, une finesse de mouture selon Blaine dans la plage de 3500 à 6000 cm²/g, une valeur de pente n dans la plage de 1,1 à 1,5 et un paramètre de position x' dans la plage de 8 à 20 µm dans un réseau granulométrique RRSB selon la norme DIN 66145.

2. Ciment alumineux selon la revendication 1, **caractérisé en ce qu'**il contient ≤ 3 % en poids de C₁₂A₇, de manière préférée ≤ 2 % en poids de C₁₂A₇ et de manière particulièrement préférée ≤ 1 % en poids de C₁₂A₇.

3. Ciment alumineux selon la revendication 1 ou 2, **caractérisé en ce qu'**il contient ≤ 7 % en poids de CA₂, de manière préférée ≤ 6 % en poids de CA₂ et de manière particulièrement préférée ≤ 4 % en poids de CA₂.

4. Ciment alumineux selon la revendication 1, 2 ou 3, **caractérisé en ce qu'**il contient ≥ 92 % en poids de CA, de manière préférée ≥ 95 % en poids de CA.

5. Ciment alumineux selon l'une quelconque des revendications 1 à 4, **caractérisé en ce que** sa couleur dans un espace colorimétrique L*a*b* se situe dans les plages de valeurs : L* = 92 ± 4, de manière préférée 93 ± 2 ; a* = -0,6 à + 0,7 et b* = -0,6 à +2,5.

6. Ciment alumineux selon l'une quelconque des revendications 1 à 5, **caractérisé en ce qu'**il contient ≤ 0,3 % en poids de fer, calculé sous forme de Fe₂O₃, de manière préférée ≤ 0,2 % en poids, de manière particulièrement préférée ≤ 0,1 % en poids.

7. Ciment alumineux selon l'une quelconque des revendications 1 à 6, **caractérisé en ce que** la valeur de pente n se situe dans la plage de 1,15 à 1,40, de manière préférée dans la plage de 1,20 à 1,30.

8. Ciment alumineux selon l'une quelconque des revendications 1 à 7, **caractérisé en ce que** le paramètre de position x' se situe dans la plage de 10 à 18 µm, de manière préférée dans la plage de 11 à 17 µm.

9. Ciment alumineux selon l'une quelconque des revendications 1 à 8, **caractérisé en ce qu'**il présente une finesse selon Blaine dans la plage de 4000 à 5000 cm²/g, de manière préférée 4200 à 4800 cm²/g.

10. Utilisation d'un ciment alumineux selon l'une quelconque des revendications 1 à 9 en tant que composant de liant dans des recettes de l'industrie de la chimie du bâtiment.

11. Utilisation d'un ciment alumineux selon l'une quelconque des revendications 1 à 9 en tant que composant de liant dans des formulations de l'industrie des matériaux réfractaires.
